# EUROPÄISCHE PATENTSCHRIFT

(11) **EP 2 855 024 B1**
(45) Veröffentlichungstag und Bekanntmachung des Hinweises auf die Patenterteilung: **10.01.2018**
(21) Anmeldenummer: 13731282.3
(22) Anmeldetag: 29.05.2013
(51) Int. Cl.: B02C 18/14, B02C 18/18, B29B 9/06, B26D 7/26

(54) **MESSERKOPF FÜR EINE UNTERWASSER-GRANULIERANLAGE**
CUTTING ROTOR FOR UNDERWATER GRANULATING PLANT
ROTOR COUPANT POUR INSTALLATION DE GRANULATION SOUS L'EAU

(30) Priorität: 30.05.2012 DE 202012101980 U
(43) Veröffentlichungstag der Anmeldung: 08.04.2015
(73) Patentinhaber: Nordson Holdings S.à r.l. & Co. KG, 40699 Erkrath (DE)
(72) Erfinder: SCHLIEF, Dirk, 48249 Dülmen (DE)
(74) Vertreter: Eisenführ Speiser
(86) Internationale Anmeldenummer: PCT/DE2013/100194
(87) Internationale Veröffentlichungsnummer: WO 2013/178220

(56) Entgegenhaltungen:
- EP-A1- 1 745 704
- DE-A1-102004 049 862
- DE-C- 719 800
- US-A- 5 060 875

## Beschreibung

Die Erfindung betrifft einen Messerkopf für eine Unterwasser-Granulieranlage, wenigstens umfassend einen Rotorkörper mit einer Vielzahl von sich am Außenumfang anschließenden Messerhaltearmen, an denen jeweils ein Messerelement befestigt ist, wobei der Rotorkörper im Bereich jedes Messerhaltearms wenigstens eine Aufnahmeausnehmung für ein Befestigungselement aufweist.

Unterwasser-Granulieranlagen dienen der Herstellung von rieselfähigen Kunststoffgranulaten. Der thermoplastische Kunststoff wird aufgeschmolzen und mittels eines Extruders durch eine Lochplatte gepresst. Der an der Lochplatte heraustretende Strang wird von einem unmittelbar entlang der Lochöffnung rotierenden Messer abgetrennt. Durch eine Kühlung im Wasserbad, in dem der Messerkopf rotiert, erstarrt der aufgeschmolzene Kunststoff zu einem festen Partikel.

Jeder Messerkopf enthält eine Vielzahl von Messerschneiden. Da diese direkt entlang der Lochplatte streifen, müssen sie aus einem harten Werkstoff hergestellt sein. Auch sollen einzelne Messer auswechselbar sein, falls eine Schneide stumpf oder beschädigt wird, ohne den gesamten Messerkopf austauschen zu müssen.

Üblicherweise werden die Schneidplatten gegen die am Außenrand des Messerkopfes abstehenden Haltearme geschraubt und zwar in einer tangentialen Richtung. Die Schrauben müssen daher in den Zwischenraum zwischen den einzelnen Messern eingeführt und in tangentialer Richtung eingesetzt und festgeschraubt werden, wodurch die Montage zum einen erschwert ist und zum anderen die Anzahl der auf einen bestimmten Außendurchmesser platzierbaren Messerschneiden begrenzt ist, damit genügend Freiraum zwischen den einzelnen Schneiden besteht. Zudem liegt der Schraubenkopf bei der bekannten Ausführungsform in dem Zwischenraum zwischen benachbarten Schneiden und bildet somit ein Hindernis für die abzufördernden Granulatkörner.

Aus der DE 198 55 617 C2 ist ein Messerkopf für eine Unterwasser-Granuliermaschine bekannt, der einen Rotorgrundkörper mit am Außenumfang abstehenden Haltearmen besitzt. Dabei ist eine Nut in dem Rotorgrundkörper vorgesehen, der sich bis in den Bereich der vorstehenden Haltearme erstreckt und die zur Aufnahme einer austauschbaren Schneidplatte vorgesehen ist. Die in die Nut eingesetzte Schneidplatte wird über eine Spannbuchse, welche sich im inneren Bereich des Rotorgrundkörpers befindet und exzentrisch ausgebildet ist, angepresst und damit befestigt. Damit wird erreicht, dass der Freiraum zwischen zwei Schneiden bzw. zwei Haltearmen für die Granulatabförderung frei bleibt, ohne dass ein störender Schneidenkopf im Weg steht. Die nur reibschlüssige Befestigung kann sich aufgrund der hohen Drehzahlen oder hohen Kräfte lösen, sodass wiederum Sicherungsmaßnahmen bei der Spannschraube erforderlich sind. Zudem ist der Kraftfluss ungünstig, da die Schneidkräfte von der relativ dünnen Schneidplatte aufgenommen werden müssen und nur im Überdeckungsbereich mit den Seitenflanken der Nut abgeleitet werden können. Eine Verdickung der Schneidplatten führt dazu, dass die Nut verbreitert werden muss, sodass wiederum die Haltearme verbreitert werden müssen und insgesamt die Anzahl von Schneiden, welche über den Umfang verteilt zu platzieren sind, reduziert werden muss.

Die US 5060875 zeigt einen Messerkopf, bei dem die Schneiden am Außenumfang angeordnet sind und entlang eines bogenförmigen Lochblechs geführt sind. Bei dieser Anordnung ist die Verteilung des Schmelzestrangs auf die große Fläche des Lochblechs schwierig. Es gibt nur wenige Messerhaltearme und wenige, aber lange Messer. Der Messerkopf ist daher nicht geeignet, um frontal vor einer Lochplatte, aus der ein Schmelzestrang austritt, eingesetzt zu werden.

Aufgabe der Erfindung ist es somit, einen Messerkopf für eine Unterwasser-Granuliermaschine der eingangs genannten Art anzugeben, bei dem eine möglichst hohe Anzahl hochbelastbarer und zugleich leicht austauschbarer Schneidelemente angeordnet werden kann.

Diese Aufgabe wird durch einen Messerkopf mit den Merkmalen des Anspruchs 1 gelöst.

Dadurch, dass die Schneidenkörper mit einem Grundkörper zu einem einstückigen Messerelement verbunden sind, werden Spannungen, die durch Kräfte im Moment des Schneidvorgangs entstehen, gleichmäßiger im gesamten Messerelement verteilt; Spannungsspitzen werden vermieden. Die einteilige Ausführung erleichtert die Herstellung mit einem Urformverfahren wie Metallguss, Metallsintern oder anderen formgebenden Fertigungsverfahren.

Im Bereich von Spannungsspitzen, insbesondere am Übergang zwischen dem rückwärtigen Bereich des Schneidenkörpers und dem Grundkörper, können zusätzliche Rippen vorgesehen sein, um den Spannungsverlauf zu optimieren.

Wesentlich ist, dass Schneidenkörper und Grundkörper einstückig ausgebildet sind. Die Schneide kann direkt an dem Schneidenkörper ausgebildet werden. Sie kann auch ein zusätzliches Schneideneinsatzelement enthalten, an dem die Schneide ausgebildet ist. Das Schneideneinsatzelement kann aus einem anderen Werkstoff bestehen. Es ist aber nicht lösbar auf den Schneidenkörper aufgesetzt, sondern in jedem Fall stoffschlüssig mit dem Schneidenkörper verbunden, sei es durch Löten, Schweißen oder Kleben. Es wird auch im rückwärtigen Bereich von dem Schneidenkörper gestützt. Das zusätzlichen Schneideneinsatzelement kann sowohl bei Messerelementen mit gerade ausgerichtetem Schneidenkörper wie auch bei Messerelementen mit schräg ausgerichtetem Schneidenkörper eingesetzt werden.

Erfindungswesentlich ist auch, dass der Grundkörper mit einer unteren Auflagefläche auf eine Stirnseite am Rotorkörper aufgesetzt ist und dass sich die Auflagefläche bis auf wenigstens einen Messerhaltearm erstreckt, wobei der Messerhaltearm an seiner Oberseite von dem Messerelement überdeckt wird. Damit wird zum einen durch den Messerhaltearm eine weit nach außen reichende Abstützung des Messerelements erreicht, andererseits sorgen die Spalte zwischen den Messerhaltearmen und darauf aufgesetzten Messerelementen für eine verbesserte Abführung des Granulats zur Rückseite des Messerkopfes. Aufgrund der vollständigen Überdeckung der Haltearme durch das aufgesetzte Messerelement wird ein Stau von Granulat an den Messerhaltearmen ebenfalls vermieden. Der Umfang an der Unterseite des Messerelements kann sogar ein gewisses Übermaß gegenüber den Auflageflächen auf den Messerhaltearmen haben, sodass keinerlei Kanten vorhanden sind, an denen Granulat hängen bleiben könnte.

Vorteilhaft ist weiterhin, wenn das Messerelement noch innerhalb des inneren Bereichs des Rotorgrundkörpers befestigt ist, also in einem Bereich, der massiv ausgebildet werden kann und in dem keine Rücksicht auf die Abförderung des Granulats genommen zu werden braucht.

Die Befestigung erfolgt vorzugsweise mit Schrauben stirnseitig von dem Rotorgrundkörper her. Die Schraubenköpfe stehen also in keiner Weise in den Förderweg des Granulats hinein. Insbesondere ist vorgesehen, in das Messerelement eine Senkung einzuarbeiten, um den Schraubenkopf vertieft aufzunehmen.

Durch das Befestigungselement, insbesondere eine Schraube, können sämtliche Fliehkräfte am rotierenden Messerkopf aufgenommen werden. Aufgrund der Klemmung der Auflagefläche des Messerelements gegenüber dem Rotorgrundkörper mit seinen Messerhaltearmen wird auch für die Kräfte quer dazu, also in tangentialer Richtung, allein durch die Verschraubung bereits eine Festlegung durch Reibschluss erreicht.

Um die im Moment der Berührung der Extruderlochplatte und der Granulatabtrennung entstehenden hohen tangentialen Kräfte aufzunehmen, ist zwischen dem Messerelement und dem jeweiligen Messerhaltearm am Rotorkopf vorzugsweise eine zusätzliche formschlüssige Kopplung vorgesehen. Damit ist das Messerelement dann an zwei Punkten am Rotorgrundkörper formschlüssig festgelegt, ohne dass eine zweite Verschraubung vorgesehen sein muss, was beim Messerwechsel den Montage- und Demontagevorgang beschleunigt. Die zusätzliche formschlüssige Abstützung am Messerhaltearm reduziert wiederum die Belastung der Schraubverbindung und mindert die Gefahr einer Lockerung der Schraubverbindung.

Die formschlüssige Kopplung auf dem Messerhalterelement erfolgt bevorzugt unmittelbar im Bereich des Schneidenkörpers, so dass wiederum der Grundkörper des Messerelements und der Übergang zwischen dem Grundkörper zum Schneidenkörper schlanker ausgebildet werden können und damit Gewicht eingespart werden kann.

Der Schneidekörper bzw. die daran befindliche Schneidkante kann parallel zur Mittelachse des Rotorkopfes ausgerichtet sein.

Auch eine Schrägstellung der Schneidkante um etwa 40° bis 50° in Bezug auf die Rotorkopfmittelachse ist möglich. Durch die Schrägstellung des Messers wird bei einigen zu granulierenden Kunststoffsorten ein besserer Schnitt des Kunststoffstranges erreicht. Bei einer Schrägstellung der Schneidenkörper sind die Formflächen, die die Schneidkante begrenzen, vorzugsweise gekrümmt ausgebildet und zwar derart, dass trotz zunehmendem Verschleißes des Schneidenkörpers und der daraus notwendigen Nachstellung des Messerkopfes die Endpunkte der Schneidkante im Wesentlichen auf denselben Teilkreisen an der Extruderlochplatte verbleiben, dass also die Schneidkante mit zunehmendem Verschleiß nicht nach innen auswandert.

Der Vorteil des erfindungsgemäßen Messerkopfes liegt darin, dass mit demselben Rotorgrundkörper durch bloßen Austausch der Messerelemente sowohl eine Bestückung mit geraden Schneiden wie auch mit schräg stehenden Schneiden möglich ist.

Sollte sich aufgrund der Spezifikation des Anwendungsfalls die eine oder andere Ausbildung der Schneide als günstiger erweisen, so braucht lediglich der Satz von Messerelementen am Rotorgrundkörper ausgetauscht zu werden.

Die Montage der Messerelemente ist bei dem Messerkopf gemäß der Erfindung besonders einfach. Der Messerkopf einer Unterwasser-Granuliermaschine ist üblicherweise so gestaltet, dass er zu Reinigungs- und Wartungszwecken von der Lochplatte des Extruders abgezogen werden kann, und zwar mitsamt der ihn umgebenden Gehäuseelemente, welche eine Abdichtung für die Wasserführung ermöglichen. Der Messerkopf ist dann von der Stirnseite frei zugänglich. Die Messerelemente bei dem erfindungsgemäßen Messerkopf können von der Stirnseite ausgetauscht werden, ohne irgendwelche seitlichen Anbauteile entfernen zu müssen oder den Messerkopf von der Rotorwelle abnehmen zu müssen.

Durch die bevorzugte zusätzliche formschlüssige Kupplung der Messerelemente mit dem Rotorgrundkörper wird das Messerelement automatisch lagerichtig ausgerichtet, ohne dass Nachstellarbeiten am neu montierten Messerelement erforderlich sind.

Möglich ist es, die Formschlusselemente zwischen Messerelement und Rotorkopf in Form einer Passung auszubilden, sodass fertig vermessene und geschliffene Messerelemente in die jeweilige Position am Messerkopf eingesetzt werden können.

Gemäß einer bevorzugten Ausführungsform ist in Bezug auf die Formschlusselemente vorgesehen, dass von der Unterseite des Grundkörpers des Messerelements ein Zapfen vorsteht, der in eine entsprechende Vertiefung im Messerhalter am Rotorkopf eingreift. Auch die umgekehrte Anordnung mit einem Zapfen am Messerhalter und einer Vertiefung am Messerelement ist möglich.

Zapfen und Ausnehmungen können zylindrisch geformt sein. Jedoch sind auch andere Formen möglich, wie beispielsweise rechteckige Stegformen, die eine günstigere Flankenpressung bewirken.

Vorzugsweise besitzt jedes Messerelement einen Schneidenkörper mit einer Schneidkante. Das hat den Vorteil, dass bei Beschädigung einer Schneidkante gezielt nur das beschädigte Messerelement ausgetauscht werden kann.

Möglich ist jedoch auch, ein Messerelement vorzusehen, das mehrere Schneidenkörper besitzt, die über einen gemeinsamen Grundkörper verbunden sind. Es können Segmente mit mehreren Schneiden vorgefertigt werden, die mit weniger Befestigungselementen am Rotorgrundkörper befestigbar sind, so dass ein Austausch eines vollständigen Messersatzes schneller möglich ist.

Die Erfindung wird nachfolgend mit Bezug auf die Zeichnung näher erläutert. Die Figuren zeigen im Einzelnen:
- Fig. 1: einen montierten Messerkopf gemäß einer ersten Ausführungsform mit gerade ausgerichteten Schneidenelementen, in perspektivischer Ansicht von der Rückseite her;
- Fig. 2: den Messerkopf aus Fig. 1 in Draufsicht auf die Vorderseite;
- Fig. 3a, 3b: ein Messerelement mit geradem Schneidenelement, jeweils in verschiedenen perspektivischen Ansichten;
- Fig. 4: die Befestigung eines Messerelements am Rotorgrundkörper im Schnitt;
- Fig. 5: den unmontierten Messerkopf gemäß der ersten Ausführungsform in perspektivischer Explosionsdarstellung von der Rückseite her;
- Fig. 6: ein vergrößertes Detail aus Fig. 2;
- Fig. 7: Ausschnitte einer perspektivischen Ansicht des montierten Messerkopfes vom Außenumfang her;
- Fig. 8: einen montierten Messerkopf gemäß einer zweiten Ausführungsform mit schräg ausgerichteten Schneidenelementen, in perspektivischer Ansicht von der Rückseite her;
- Fig. 9: ein Messerelement mit schrägem Schneidenelement in perspektivischer Ansicht und
- Fig. 10: ein weiteres Messerelement mit geradem Schneidenelement in perspektivischer Ansicht.

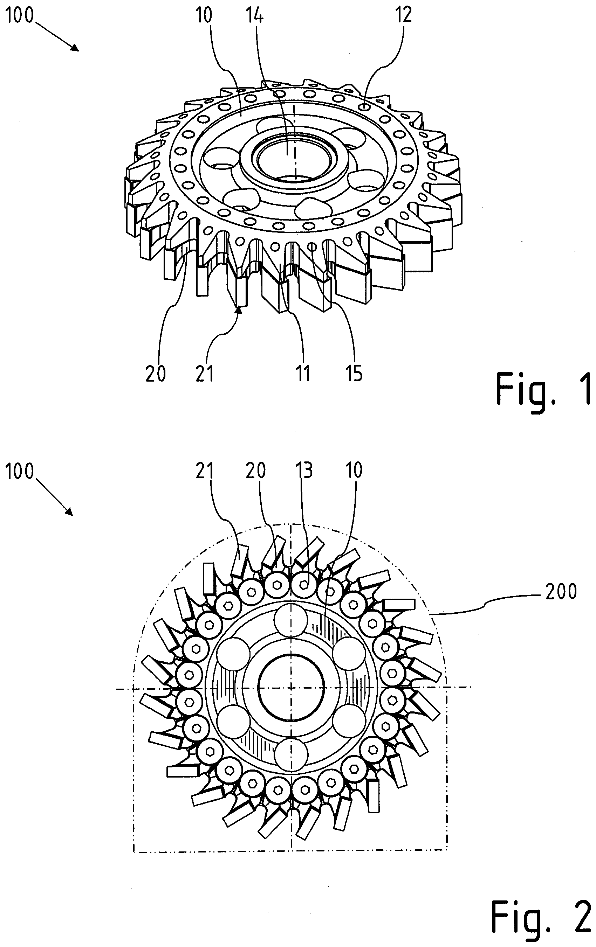

Figur 1 zeigt einen montierten Messerkopf 100, der im Wesentlichen aus einem zahnradartigen Rotorgrundkörper 10 und einer Vielzahl von daran angesetzten Messerelementen 20 besteht.

Der Rotorgrundkörper 10 besitzt eine zentrale Bohrung 14 zur Befestigung auf einer Rotorwelle. Am Außenumfang schließen sich eine Vielzahl von Messerhaltearmen 11 an, die sich ähnlich wie die Flanken eines Zahnes an einem Zahnrad nach außen hin verjüngen, wobei sich die Messerhaltearme 11 aber nicht genau radial nach außen erstrecken, sondern vorzugsweise in einem Winkel von 35° bis 55° zum Radius bzw. Durchmesser angestellt sind, wobei auch andere Winkel möglich sind. Die Schrägstellung der Messerhaltearme 11 in Bezug auf den Durchmesser führt dazu, dass eine Scheidenkante 21 am Messerelement 20 einen ziehenden Schnitt vollzieht, wenn sie auf den an der Lochplatte austretenden Granulatstrang trifft.

Querschnitt und Ausrichtung der Messerhaltearme 11 sind so gewählt, dass eine Überdeckung durch das aufgesetzte Messerelement 20 erfolgt, so dass keine vorstehenden Kanten bestehen, die für die Abförderung des Granulats hinderlich wären.

Erkennbar beim Blick auf die Rückseite des Rotorgrundkörpers 10 in Figur 1 sind noch Gewindebohrungen 12 für die Aufnahme einer Befestigungsschraube sowie zusätzliche Ausnehmungen 15, über welche jeweils eine formschlüssige Kupplung mit einem Zapfen am Messerelement 20 bewirkt wird.

Figur 2 zeigt den Messerkopf von der Vorderseite her, also aus Sicht vom Extruder aus. Die hier gezeigte Ansicht entspricht der Ansicht eines Messerkopfes 100 in einer Unterwasser-Granulieranlage, der von der Düsenplatte des Extruders abgezogen ist. Die strichpunktierte Linie deutet Verkleidungsteile 200 an, die bei dem erfindungsgemäßen Messerkopf 100 für die Montage der Messerelemente 20 in keiner Weise hinderlich sind.

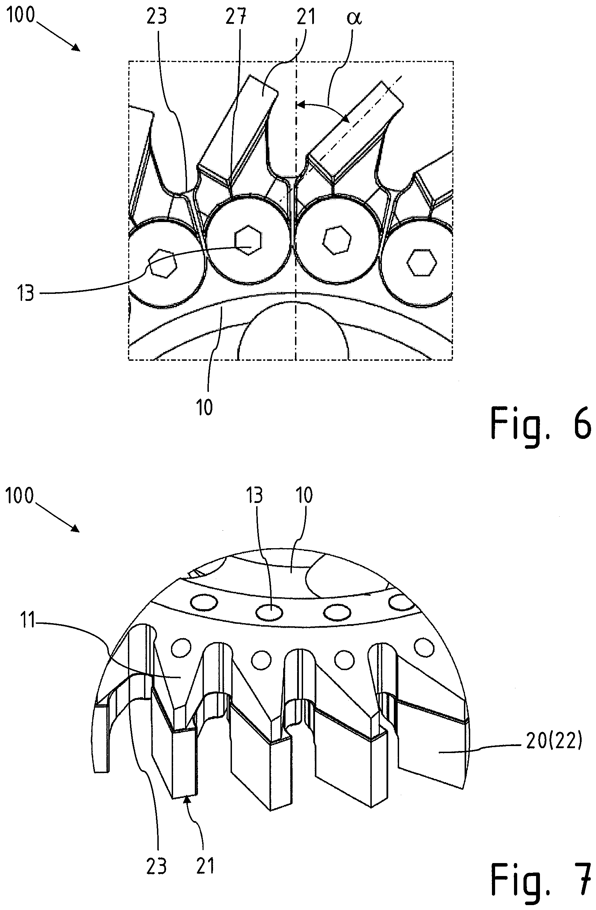

Figur 6 zeigt einen vergrößerten Ausschnitt aus Figur 2. Erkennbar ist hier die spannungsoptimierte Gestaltung der Messerelemente 20. Die eigentliche Schneidkante 21 ist Teil eines plattenartigen Schneidenkörpers 22, der in einen Grundkörper 23 übergeht. Rippen 27 verstärken den Bereich des Übergangs. Die Schneidkante 21 ist in einem Winkel α = 35°...55° schräg zum Durchmesser angestellt. Die Köpfe der Befestigungsschrauben 13 liegen vertieft in einer Senkung am Grundkörper 23 des Messerelements 20. Die Grundkörper 23 besitzen hier einen trapezförmigen Grundriss, um am vorgesehen Teilkreis eine dichte Anordnung von Messerelementen 20 zu ermöglichen.

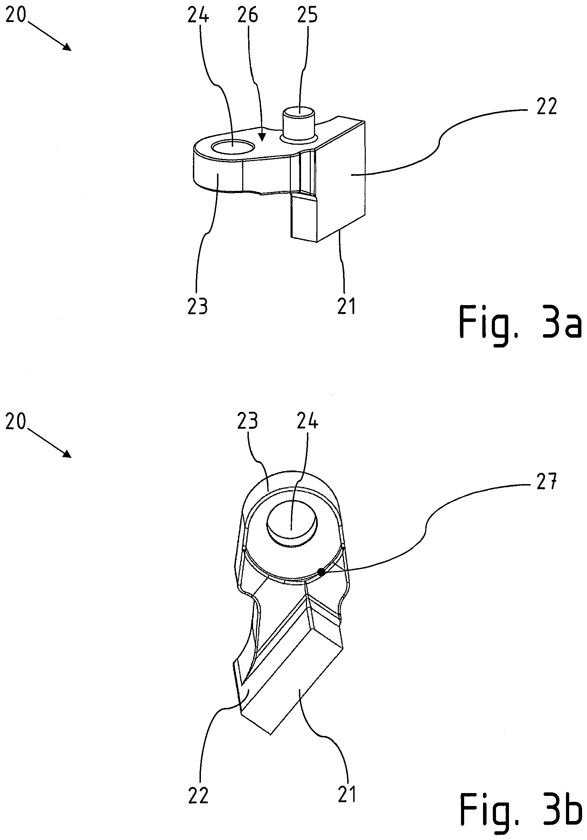

Figur 3a zeigt ein einzelnes Messerelement 20 in perspektivischer Ansicht auf die Unterseite, die eine Auflagefläche 26 bildet, mit der das Messerelement 20 auf den Rotorgrundkörper 10 und die Messerhaltearme 11 aufgesetzt wird. Ein plattenförmiger Schneidenkörper 22 ist mit einem Grundkörper 23 zu dem Messerelement 20 vereinigt. An der Auflagefläche 26 sind ein Zapfen 25 und eine Bohrung 24 angeordnet.

Figur 3b zeigt das Messerelement 20 von vorn. Deutlich erkennbar sind die Rippen 27 am Übergang zwischen Schneidenkörper 22 und Grundkörper 23 sowie die Senkung zur Aufnahme des Schraubenkopfes um die Bohrung 24 herum.

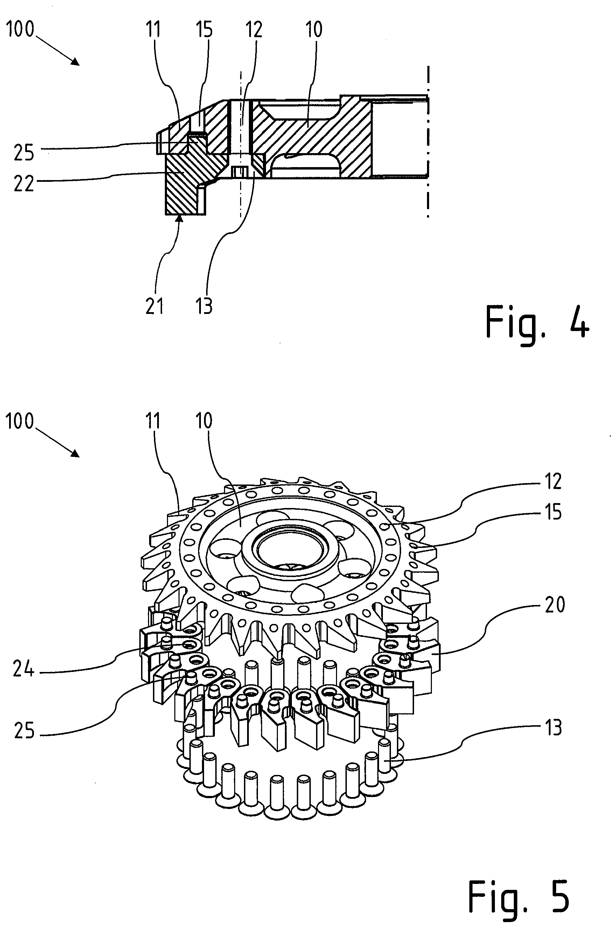

Wie die Schnittdarstellung in Figur 4 zeigt, dient die Bohrung 24 im Grundkörper 23 der Durchführung der Befestigungsschraube 13. Der Zapfen 25 greift in die Ausnehmung 15 am Messerhaltearm 11 ein und bewirkt somit eine formschlüssige Festlegung des Messerelements 20 in allen Richtungen quer zur Rotationsachse des Messerkopfes 100. Mittels eines geeigneten Werkzeugs kann durch die nach unten offene Bohrung 15 hindurch das montierte Messerelement 20 ausgetrieben werden.

Figur 5 zeigt den Messerkopf 100 in Explosionsdarstellung in lagerichtiger Anordnung der Teile zueinander. Die Messerelemente 20 brauchen lediglich so auf den Rotorgrundkörper 10 aufgesetzt zu werden, dass der Zapfen 25 in die Bohrung 15 eingreift. Danach wird das Messerelement 20 mit der Schraube 13 gesichert.

Figur 7 zeigt einen Blick vom Außenrand her in die Zwischenräume zwischen den einzelnen Messerhaltearmen 11 bzw. den Messerelementen 20. Die Querschnitte der Messerelemente 20 überdecken die Messerhaltearme 11. Die Zwischenräume sind damit frei von Vorsprüngen oder Schraubenköpfen und ermöglichen eine ungehinderte Abfuhr des Granulats. Zugleich bewirken die Messerhaltearme 11 eine gute Abstützung der Messerelemente 20 gegenüber Kräften, die in Richtung der Rotationsachse wirken und aufgrund der zusätzlichen formschlüssigen Kopplung auch gegenüber Kräften, die quer dazu wirken.

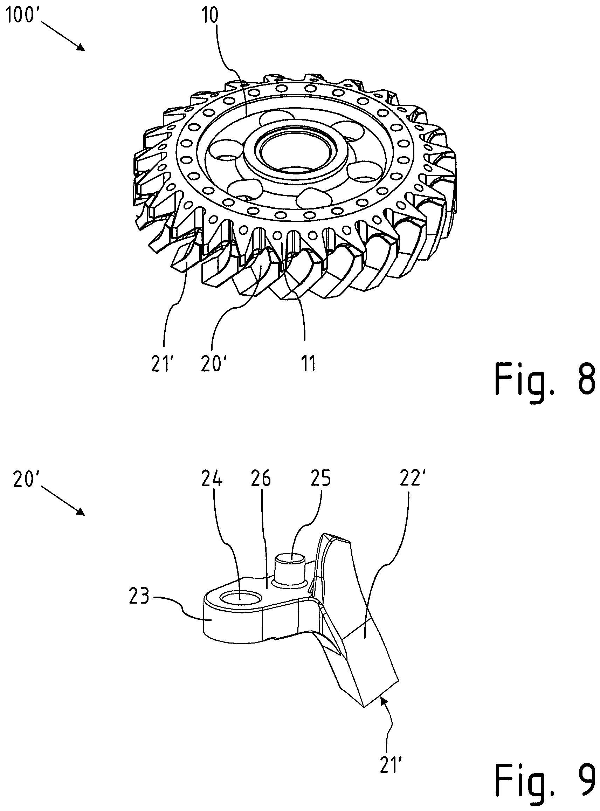

Figur 8 zeigt eine zweite Ausführungsform des erfindungsgemäßen Messerkopfes 100'. Daran sind Messerelemente 20' mit einer schräg angestellten Schneidkante 21' angebracht. Der Rotorgrundkörper 10 mit den Messerhaltearmen 11 von der ersten Ausführungsform des Messerkopfes 100 kann hierbei unverändert eingesetzt werden.

Nur die Messerelemente 20', von denen eines in Figur 9 perspektivisch dargestellt ist, sind andersartig ausgebildet. Sie sind wieder bevorzugt als einstückige Formteile gestaltet, wobei der Grundkörper 23 mit Bohrung 24, Zapfen 25 und Auflagefläche 26 prinzipiell ebenfalls gegenüber der ersten Ausführungsform des Messerelements 20, das in den Figuren 3a, 3b dargestellt ist, verändert zu werden braucht. Lediglich der Schneidenkörper 22' ist anders ausgebildet. Er ist zur rückwärtigen Seite bis über die Auflagefläche 26 hinaus verlängert, um eine ungehinderte Ableitung des Granulats an den Messerhaltearmen 11 vorbei zu ermöglichen.

Somit können bei der Erfindung an einem einheitlichen Rotorgrundkörper 10 wahlweise die Messerelemente 20 mit geraden Schneidkanten oder die Messerelemente 20' mit schrägen Schneidkanten angebracht werden.

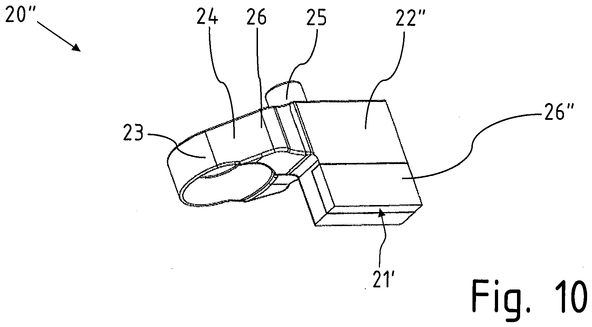

Figur 10 zeigt ein Messerelement 20", das eine leichte Abwandlung der ersten Ausführungsform des Messerelements 20 ist. Unterschiedlich ist, dass zwar Grundkörper 23 und Schneidenkörper 22" einstückig ausgebildet sind, dass aber im Bereich des Schneidenkörpers 22" noch ein Schneideneinsatzelement 26" eingesetzt und stoffschlüssig angebunden ist, das z.B. aus einem besonders harten und verschleißfesten Werkstoff gebildet ist.

## Patentansprüche

1. Messerkopf (100; 100') für eine Unterwasser-Granulieranlage, wenigstens umfassend einen zahnradförmigen Rotorkörper (10) mit einer Vielzahl von sich am Außenumfang anschließenden und nach außen hin verjüngenden Messerhaltearmen (11), an denen jeweils ein Messerelement (20; 20'; 20") befestigt ist, wobei der Rotorkörper (10) im Bereich jedes Messerhaltearms (11) wenigstens eine Aufnahmeausnehmung (12) für ein Befestigungselement (13) aufweist,
**dadurch gekennzeichnet,**
- **dass** das Messerelement (20; 20'; 20") mit einem Grundkörper (23) und wenigstens einem Schneidenkörper (22; 22'; 22") einstückig ausgebildet ist,
- **dass** der Grundkörper (23) des Messerelements (20; 20'; 20") mit einer unteren Auflagefläche (26) auf eine Stirnseite am Rotorkörper (10) aufgesetzt ist
- **dass** sich die Auflagefläche (26) bis auf wenigstens einen Messerhaltearm (11) erstreckt, wobei der Messerhaltearm (11) an seiner Oberseite von dem Messerelement (20; 20'; 20") überdeckt wird
- und **dass** der Schneidenkörper (22; 22'; 22") wenigstens eine angeformte Schneidkante (21; 21') aufweist und/oder mit einem eingebetteten Schneideneinsatzelement (27") mit einer Schneidkante (22") stoffschlüssig verbunden ist.

2. Messerkopf (100; 100') nach Anspruch 1, **dadurch gekennzeichnet, dass** der Grundkörper (23) wenigstens eine Bohrung (24) zur Durchführung des Befestigungselements (13) und ein Formschlusselement (25) zum Eingriff in ein Formschlusselement (15) des Rotorkörpers (10) aufweist.

3. Messerkopf (100; 100') nach Anspruch 1 oder 2, **dadurch gekennzeichnet, dass** am Rotorkörper (10) Aufnahmeausnehmungen (12) für die Befestigungselemente (13) außerhalb der Messerhaltearme (11) angeordnet sind.

4. Messerkopf (100; 100') nach wenigstens einem der Ansprüche 1 bis 3, **dadurch gekennzeichnet, dass** das Befestigungselement eine Schraube (13) ist und die Aufnahmeausnehmung (12) dafür eine Gewindebohrung ist.

5. Messerkopf (100; 100') nach wenigstens einem der Ansprüche 2 bis 4, **dadurch gekennzeichnet, dass** das Formschlusselement am Messerhaltearm (11) eine Ausnehmung (15) oder Vertiefung ist und dass das Formschlusselement am Grundkörper (23) des Messerelements (20; 20'; 20") ein Zapfen (25) ist.

6. Messerkopf nach wenigstens einem der Ansprüche 2 bis 4, **dadurch gekennzeichnet, dass** das Formschlusselement am Messerhaltearm ein Zapfen ist und dass das Formschlusselement am Grundkörper des Messerelements eine Ausnehmung oder Vertiefung ist.

7. Messerkopf (100) nach wenigstens einem der Ansprüche 1 bis 6, **dadurch gekennzeichnet, dass** die Schneidkanten (21) parallel zur Mittelachse des Rotorgrundkörpers (10) ausgerichtet sind.

8. Messerkopf (100') nach wenigstens einem der Ansprüche 1 bis 6, **dadurch gekennzeichnet, dass** die Schneidkanten (21') zur Mittelachse des Rotorgrundkörpers (10) schräg angestellt sind.

9. Messerkopf (100; 100') nach wenigstens einem der Ansprüche 1 bis 8, **dadurch gekennzeichnet, dass** sich die Messerhaltearme (11) von einer Basis am Rotorgrundkörper (10) zu einem Spitzenbereich am Außenumfang verjüngen.

10. Messerkopf (100; 100') nach Anspruch 9, **dadurch gekennzeichnet, dass** eine sich von der Basis zum Spitzenbereich erstreckende Mittellinie des Messerhaltearms (11) in einem Winkel von 35 ° bis 55° zum Durchmesser angestellt ist.

11. Messerkopf (100; 100') nach wenigstens einem der vorhergehenden Ansprüche, **dadurch gekennzeichnet, dass** das Messerelement (20, 20', 20") mit einer Oberflächenbeschichtung versehen ist.

## Claims

1. A cutter head (100; 100') for an underwater pelletizing plant, at least comprising a sprocket-shaped rotor body (10) having a plurality of cutter holding arms (11) adjoining the outer circumference and tapering outwards, to each of which at least one cutter element (20; 20'; 20") is attached, said rotor body (10) having at least one receiving recess (12) in the region of each cutter holding arm (11) for receiving a fastener (13),
**characterized in that**
- the cutter element (20; 20'; 20") is of integral construction, having a base member (23) and at least one cutting body (22; 22'; 22"),
- the base member (23) of the cutter element (20; 20'; 20") is placed with a lower support surface (26) onto a end face on the rotor body (10),
- the support surface (26) extends to at least one cutter holding arm (11), wherein said cutter holding arm (11) is covered on its top side by the cutter element (20; 20'; 20")
- and that the cutting body (22; 22'; 22") has at least one cutting edge (21; 21') and/or is connected in a material fit to an embedded cutting insert element (27") having a cutting edge (22").

2. The cutter head (100; 100') according to claim 1, **characterized in that** the base member (23) has at least one bore (24) through which the fastener (13) can pass, and a form-locking element (25) for engaging in a form-locking element (15) of the rotor body (10).

3. The cutter head (100; 100') according to claim 1 or 2, **characterized in that** receiving recesses (12) for the fasteners (13) are arranged on the rotor body (10) outside the cutter holding arms (11).

4. The cutter head (100; 100') according to at least one of claims 1 to 3, **characterized in that** the fastener is a screw fastener (13) and receiving recess (12) for receiving it is a threaded bore.

5. The cutter head (100; 100') according to at least one of claims 2 to 4, **characterized in that** the form-locking element on the cutter holding arm (11) is a recess (15) or an indentation and that the form-locking element on the base member (23) of the cutter element (20; 20'; 20") is a stud (25).

6. The cutter head according to at least one of claims 2 to 4, **characterized in that** the form-locking element on the cutter holding arm is a stud and that the form-locking element on the base member of the cutter element (20; 20'; 20") is a recess or an indentation.

7. The cutter head (100) according to at least one of claims 1 to 6, **characterized in that** the cutting edges (21) are aligned parallel to the middle axis of the rotor base member (10).

8. The cutter head (100') according to at least one of claims 1 to 6, **characterized in that** the cutting edges (21') are slanted relative to the middle axis of the rotor base member (10).

9. The cutter head (100; 100') according to at least one of claims 1 to 8, **characterized in that** the cutter holding arms (11) taper from a base on the rotor base member (10) to a tip region at the outer periphery.

10. The cutter head (100; 100') according to claim 9, **characterized in that** a middle line of the cutter holding arm (11) extending from the base to the tip region is slanted at an angle of 35° to 55° relative to the diameter.

11. The cutter head (100; 100') according to at least one of the preceding claims, **characterized in that** the cutter element (100; 100') is provided with surface coating.

## Revendications

1. Tête de coupe (100 ; 100') pour une installation de granulation sous l'eau, comprenant au moins un corps de rotor (10) en forme de roue dentée avec une pluralité de bras porte-lame (11) se raccordant à la périphérie extérieure et se rétrécissant vers l'extérieur, sur lesquels respectivement un élément de lame (20 ; 20' ; 20") est fixé, dans laquelle le corps de rotor (10) présente, dans la zone de chaque bras porte-lame (11), au moins un évidement de réception (12) pour un élément de fixation (13),
**caractérisée en ce**
- **que** l'élément de lame (20 ; 20' ; 20") est réalisé d'un seul tenant avec un corps de base (23) et au moins un corps de coupe (22 ; 22' ; 22''),
- **que** le corps de base (23) de l'élément de lame (20 ; 20' ; 20") est posé avec une surface d'appui inférieure (26) sur un côté frontal au niveau du corps de rotor (10)
- **que** la surface d'appui (26) s'étend jusqu'à au moins un bras porte-lame (11), dans lequel le bras porte-lame (11) est recouvert au niveau de son côté supérieur par l'élément de lame (20 ; 20' ; 20")
- et **que** le corps de coupe (22 ; 22' ; 22") présente au moins une arête de coupe (21 ; 21') rapportée et/ou est relié par correspondance de matière à un élément insert de coupe (27") encastré avec une arête de coupe (22").

2. Tête de coupe (100 ; 100') selon la revendication 1, **caractérisée en ce que** le corps de base (23) présente au moins un perçage (24) pour le passage de l'élément de fixation (13) et un élément à complémentarité de forme (25) pour la prise dans un élément à complémentarité de forme (15) du corps de rotor (10).

3. Tête de coupe (100 ; 100') selon la revendication 1 ou 2, **caractérisée en ce que** des évidements de réception (12) sont agencés au niveau du corps de rotor (10) pour les éléments de fixation (13) à l'extérieur des bras porte-lame (11).

4. Tête de coupe (100 ; 100') selon au moins l'une quelconque des revendications 1 à 3, **caractérisée en ce que** l'élément de fixation est une vis (13) et l'évidement de réception (12) est un trou taraudé pour cela.

5. Tête de coupe (100 ; 100') selon au moins l'une quelconque des revendications 2 à 4, **caractérisée en ce que** l'élément à complémentarité de forme au niveau du bras porte-lame (11) est un évidement (15) ou un creux et que l'élément à complémentarité de forme au niveau du corps de base (23) de l'élément de lame (20 ; 20' ; 20") est un tenon (25).

6. Tête de coupe selon au moins l'une quelconque des revendications 2 à 4, **caractérisée en ce que** l'élément à complémentarité de forme au niveau du bras porte-lame est un tenon et que l'élément à complémentarité de forme au niveau du corps de base de l'élément de lame est un évidement ou un creux.

7. Tête de coupe (100) selon au moins l'une quelconque des revendications 1 à 6, **caractérisée en ce que** les arêtes de coupe (21) sont orientées parallèlement à l'axe médian du corps de base de rotor (10).

8. Tête de coupe (100') selon au moins l'une quelconque des revendications 1 à 6, **caractérisée en ce que** les arêtes de coupe (21') sont placées en oblique par rapport à l'axe médian du corps de base de rotor (10).

9. Tête de coupe (100 ; 100') selon au moins l'une quelconque des revendications 1 à 8, **caractérisée en ce que** les bras porte-lame (11) se rétrécissent d'une base au niveau du corps de base de rotor (10) à une zone de pointe au niveau de la périphérie extérieure.

10. Tête de coupe (100 ; 100') selon la revendication 9, **caractérisée en ce qu'**une ligne médiane du bras porte-lame (11) s'étendant de la base à la zone de pointe est placée selon un angle de 35° à 55° par rapport au diamètre.

11. Tête de coupe (100 ; 100') selon au moins l'une quelconque des revendications précédentes, **caractérisée en ce que** l'élément de lame (20 ; 20' ; 20") est doté d'un revêtement de surface.
